## Europäisches Patentamt

## European Patent Office

## Office européen des brevets

(19)

(11) Veröffentlichungsnummer: **0 145 074 B1**

(12) **EUROPÄISCHE PATENTSCHRIFT**

(45) Veröffentlichungstag der Patentschrift:
**03.05.89**

(51) Int. Cl.⁴: **H 01 J 35/10**

(21) Anmeldenummer: **84201728.7**

(22) Anmeldetag: **28.11.84**

(54) **Drehanoden-Röntgenröhre mit einem Gleitlager.**

(30) Priorität: **05.12.83 DE 3343886**

(43) Veröffentlichungstag der Anmeldung:
**19.06.85 Patentblatt 85/25**

(45) Bekanntmachung des Hinweises auf die Patenterteilung:
**03.05.89 Patentblatt 89/18**

(84) Benannte Vertragsstaaten:
**DE FR GB**

(56) Entgegenhaltungen:
**FR-A- 2 338 578**
**FR-A- 2 439 476**
**FR-A- 2 456 383**
**FR-A- 2 475 799**

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **FR GB**

(72) Erfinder: **Hartl, Walter, Volksdorfer Damm 54, D-2000 Hamburg 67 (DE)**
Erfinder: **Peter, Diethard, Hermann-Balk-Strasse 113, D-2000 Hamburg 73 (DE)**
Erfinder: **Reiber, Klaus, Ipernweg 7, D-2000 Hamburg 63 (DE)**

(74) Vertreter: **Hartmann, Heinrich, Dipl.-Ing. et al, Philips Patentverwaltung GmbH Wendenstrasse 35 Postfach 10 51 49, D-2000 Hamburg 1 (DE)**

ACTORUM AG

## Beschreibung

Die Erfindung betrifft eine Drehanoden-Röntgenröhre mit einem Gleitlager, das zwischen einem rotierenden Teil und einem feststehenden Teil eine Schicht aus einem flüßigen Metall oder einer flüßigen Metall-Legierung aufweist, und mit einem weiteren Lagersystem.

Eine solche Drehanoden-Röntgenröhre ist aus der DE-A-3 017 291 bekannt. Das Gleitlager nimmt dabei die radial wirkenden Lagerkräfte auf, während das weitere Lagersystem, ein Magnetlager, die axial wirkenden Kräfte aufnimmt.

Der Vorteil einer derartigen Röntgenröhre liegt darin, daß die Hochspannung für die Drehanode über das Gleitlager zugeführt werden kann und daß das Gleitlager gleichzeitig dazu benutzt werden kann, die im Bereich des Gleitlagers auftretende Wärme abzuführen. Ein Nachteil der Röntgenröhre besteht jedoch darin, daß das Gleitlager relativ hohe Reibungskräfte verursacht, weil dieses Gleitlager die gesamten radial wirkenden Kräfte aufnehmen muß; je größer aber die Tragkraft eines Gleitlagers ist, desto größer ist auch seine Reibung. Wenn bei einer derartigen Drehanoden-Röntgenröhre die Anodenscheibe wie in der Vorveröffentlichung angegeben ständig rotieren soll, beispielsweise während eines ganzen Arbeitstages, wobei der Röhrenstrom und die Röhrenspannung nach Bedarf ein- und ausgeschaltet werden, muß eine zusätzliche elektrische Leistung aufgebracht werden, um diese Reibung zu überwinden. Diese elektrische Leistung wird in der Röntgenröhre in Wärme umgesetzt, so daß dadurch das Gleitlager und gegebenenfalls auch die Drehanode erwärmt wird.

FR-A-2 338 578 befaßt sich mit einer magnetischen Lagerung wobei Elektromagnete auf einen Rotor eine Anziehungskraft ausüben, die den Rotor im Gleichgewichtszustand in einer definierten Position in axialer als auch in radialer Richtung hält.

Aufgabe der vorliegenden Erfindung ist es, die eingangs erwähnte Röntgenröhre derart auszubilden, daß über das Gleitlager gleichfalls der Röhrenstrom zu- und der Wärmestrom abführbar ist, und daß die Reibungsverluste klein gehalten werden. Diese Aufgabe wird erfindungsgemäß durch die im Kennzeichen des Hauptanspruchs angegebenen Maßnahmen gelöst.

Bei der Erfindung können die im Betrieb auftretenden Lagerkräfte also vollständig von dem weiteren Lagersystem aufgenommen werden; das Gleitlager kann daher für sehr geringe Lagerkräfte ausgelegt werden, was die im Betrieb auftretende Reibung niedriger hält.

Grundsätzlich kann das weitere Lagersystem ein oder mehrere Kugellager enthalten. Der Vorteil einer solchen Ausführungsform besteht darin, daß der Wärmestrom nicht über die Kugellager abgeleitet werden muß, sondern über das Gleitlager abgeleitet werden kann, was die thermische Belastung der Kugellager wesentlich verringert. Mit besonderem Vorteil ist die Erfindung aber bei solchen Röntgenröhren anwendbar, die als weiteres Lagersystem ein Magnetlagersystem aufweisen und bei denen die Drehanode während eines Arbeitstages ständig rotiert, wobei der gesamte Röntgenröhrenstrom sowie der Wärmestrom über das Gleitlager abgeleitet wird.

Die Reibung in einem Gleitlager hängt von verschiedenen Parametern ab. Ein Parameter ist beispielsweise die Größe der Fläche des feststehenden bzw. des rotierenden Teils, die über die flüssige Metallschicht miteinander gekoppelt sind. Je größer diese Fläche ist, desto größer ist die Tragfähigkeit des Lagers, desto größer ist aber auch seine Reibung. Diese Fläche wird daher so klein bemessen, daß sie gerade zum Abführen des im Betrieb auftretenden Wärmestromes ausreicht. Ein weiterer, die Reibung bestimmender Parameter ist die Umfangsgeschwindigkeit im Bereich des Gleitlagers. Je geringer die Umfangsgeschwindigkeit ist, desto geringer sind Reibung und Tragfähigkeit. Das Gleitlager sollte sich daher möglichst in der Drehachse befinden. Schließlich werden Reibung und Tragkraft auch noch von dem Abstand zwischen dem rotierenden und dem feststehenden Teil des Gleitlagers bestimmt. Je größer dieser Abstand ist, desto geringer ist seine Reibung, desto geringer ist aber auch seine Tragfähigkeit.

Man kann nun das weitere Lagersystem so anordnen bzw. – bei einem magnetischen Lagersystem – so betreiben, daß sich ein relativ großer Spalt zwischen dem feststehenden und dem rotierenden Teil des Magnetlagers ergibt. Dies setzt aber eine hohe Präzision bei der Fertigung bzw. bei der Positionsregelung in einem Magnetlager voraus. Selbst wenn aber diese hohen Anforderungen erfüllt würden, könnte die Reibung im Lager in unerwünschter Weise steigen, wenn die Drehzahl, mit der die Drehanoden-Röntgenröhre betrieben wird, erhöht würde. Eine Weiterbildung der Erfindung sieht daher vor, daß der feststehende Teil des Gleitlagers von einem nachgiebigen Teil, vorzugsweise von einem Metallbalg getragen wird, der mit einem feststehenden Teil der Röntgenröhre verbunden ist.

Die von einem auf diese Weise angeordneten Gleitlager aufgenommenen Lagerkräfte und damit auch die Reibung werden begrenzt durch die Nachgiebigkeit des Teils, an dem der feststehende Teil des Gleitlagers befestigt ist. Wenn dabei die Drehzahl erhöht würde, würde sich der hydrodynamische Druck in dem Gleitlager erhöhen, was zur Folge hätte, daß der nachgiebige Teil so verformt würde, daß sich der Abstand zwischen dem rotierenden Teil und dem feststehenden Teil des Gleitlagers vergrößern würde, was die durch die erhöhte Drehzahl bedingte Reibungszunahme zumindest teilweise wieder kompensieren kann. – Wenn der feststehende Teil des Gleitlagers an einem federnden Metallbalg befestigt ist, kann die Tragfähigkeit und die Reibung des Gleitlagers weiter verringert werden, indem im Innern des Metallbalges eine Feder so angeordnet ist, daß die durch den Differenzdruck zwischen Atmosphäre und Vakuum erzeugte Kraft auf den Balg dadurch wenigstens teilweise wieder aufgehoben wird.

Die Erfindung wird nachstehend anhand der Zeichnungen näher erläutert. Es zeigen

Fig. 1 eine Röntgenröhre nach der Erfindung und

Fig. 2 eine bevorzugte Ausführungsform eines Teils einer solchen Röntgenröhre.

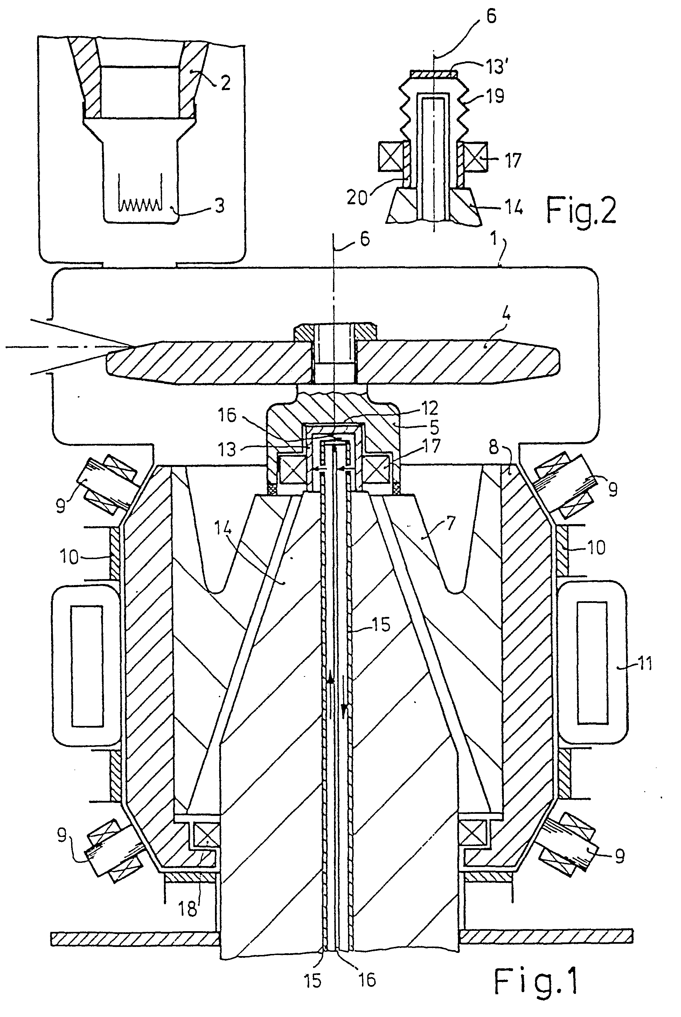

Die Röntgenröhre nach Fig. 1 besitzt einen aus Metall bestehenden geerdeten Kolben 1, an dem mittels eines Isolators 2 die negatives Hochspannungspotential führende Kathode 3 befestigt ist. Die Drehanode umfaßt eine Anodenscheibe 4, die mittels einer Antriebswelle 5 um die Drehachse 6 drehbar ist. Die Antriebswelle ist über einen Keramikisolator 7 mit einem Rotor 8 verbunden. Im Bereich des Rotors 8 ist ein Magnetlagersystem vorgesehen, das eine Anzahl von in geeigneter Weise angeordneten Spulen 9 umfaßt, die den Rotor 8 in vorbestimmter Weise positionieren, sowie Sensoren 10, welche die Erregung der Spulen 9 steuern. Damit läßt sich der Rotor 8 in eine genau definierte Position bringen. Derartige Magnetlagersysteme sind bekannt, insbesondere auch in Verbindung mit Drehanoden-Röntgenröhren, auch solchen, deren Rotor über einen Isolator mit der Antriebswelle der Anodenscheibe verbunden ist (vgl. DE-OS 2 601 529).

Die elektrische Leistung zum Antrieb des Rotors 8 bzw. der Anodenscheibe 4 wird von einem Stator 11 erzeugt, der auf dem Röhrenkolben 1 ebenfalls im Bereich des Rotors 8 angeordnet ist. Vorzugsweise wird die Drehanoden-Röntgenröhre im Dauerlauf betrieben, d. h. sie wird zu Beginn eines Arbeitstages auf die erforderliche Drehzahl gebracht und danach auf dieser Drehzahl gehalten. Bei einer Aufnahme wird lediglich die Röhrenspannung und der Röhrenstrom eingeschaltet. Dieser Dauerlaufbetrieb hat gegenüber dem Kurzzeitbetrieb, bei dem die Anodenscheibe unmittelbar vor Beginn einer Aufnahme auf die erforderliche Drehzahl beschleunigt wird, den Vorteil, daß zur Beschleunigung wesentlich kleinere Leistungen und damit auch kleinere Statoren erforderlich sind, er setzt allerdings voraus, daß nur kleine Reibungskräfte auftreten.

Die Antriebswelle 5 weist eine zylinderförmige Bohrung auf, die zur Anodenscheibe 4 hin durch eine kreisförmige, zur Drehachse 6 konzentrisch und senkrecht verlaufende Stirnfläche 12 begrenzt wird. Diese Bohrung umschließt einen Topf 13, d. h. ein zylinderförmiges, zur Drehachse 6 konzentrisches Teil, das zur Anodenscheibe hin durch eine kreisförmige, zur Fläche 12 parallele Scheibe abgeschloßen ist. Dieser Topf 13 befindet sich am Ende eines feststehenden konischen Keramikisolators 14, der in eine entsprechend geformte konische Ausnehmung des rotierenden Keramikisolators 7 hineinragt.

In dem Spalt zwischen der im Betrieb rotierenden Stirnfläche 12 der Antriebswelle 5 und der ihr zugewandten, parallelen und feststehenden Bodenfläche des Topfes 13 befindet sich eine nicht näher dargestellte Schicht aus einem flüssigen Metall oder einer flüssigen Metall-Legierung, die zusammen mit den beiden erwähnten Flächen ein Gleitlager bildet. Vorzugsweise ist dieses Gleitlager als sogenanntes Spiralrillenlager ausgebildet. Zu diesem Zweck sind beispielsweise in der Stirnfläche 12 Spiralrillen vorgesehen, die bewirken, daß die flüssige Schicht nach innen, d. h. zur Drehachse 6 hin gedrückt wird, wenn die Anodenscheibe 4 in einer bestimmten Richtung rotiert (in der entgegengesetzten Richtung darf die Anodenscheibe nicht rotieren, weil sonst das flüssige Metall bzw. die flüssige Metall-Legierung auslaufen würde). Derartige Spiralrillenlager sind auch in Verbindung mit Drehanoden-Röntgenröhren prinzipiell bekannt – vgl. u.a. DE-A-3 017 291.

Dieses Gleitlager, das radial wirkende Kräfte ohnehin nicht aufnehmen kann, ist so ausgelegt, daß es im Betriebszustand, d. h. wenn die Anodenscheibe rotiert, nur einen geringen Bruchteil der in axialer Richtung wirkenden Lagerkräfte aufnimmt, weshalb in diesem Lager nur geringe Reibungsverluste auftreten. Die eigentliche Lagerung wird mit Hilfe des Magnetlagersystems 9, 10 erreicht.

Das Gleitlager hat somit praktisch keine Lagerfunktion. Es dient vielmehr der Abfuhr der in der Anodenscheibe erzeugten Wärme und gleichzeitig als Kontakt für die Zuführung des Hochspannungspotentials. Die Wärmeabfuhr erfolgt mittels eines Kühlmittels, das die Innenflächen des Topfes 13 durchströmt. Es wird mittels eines Metallrohres 15 zu- und abgeführt, das im Innern des Isolators 14 konzentrisch zur Drehachse 6 angeordnet und in Längsrichtung durch eine Mittelwand 15 unterteilt ist und in den Topf 13 hineinragt, wo es durch eine senkrechte Stirnfläche abgeschlossen wird. Das Kühlmittel tritt durch Öffnungen in der Seitenwand ein bzw. aus derart, daß es zwischen Austritt und Wiedereintritt in das Rohr die Innenflächen des Topfes 13 umströmt und diesen dadurch kühlt. Eine Feder 16, die das Metallrohr 15 und den Topf 13 kontaktiert, bewirkt, daß die ggf. rotierende Anodenscheibe und das Metallrohr 15 über die Antriebswelle 5, das Gleitlager, den Topf 13 und die Feder 16 elektrisch miteinander verbunden sind, so daß die Hochspannung für die Anodenscheibe über das Rohr 15 zugeführt werden kann.

Auf dem äuseren Umfang des Topfes 13 befindet sich ein Kugellager 17 in geringem Abstand von der Innenfläche der Antriebswelle 12. Ebenso ist auf dem äußeren Umfang des Isolators 14 ein Kugellager 18 angeordnet, das sich in geringem Abstand von den Enden des Rotors 8 befindet. Diese Kugellager nehmen die von der Drehanode ausgeübten Lagerkräfte auf, wenn entweder während des Betriebes das Magnetlagersystem ausfällt – beispielsweise bei einer Netzunterbrechung – oder wenn das Magnetlagersystem abgeschaltet ist. Obwohl das obere Kugellager 17 sich nur in geringem Abstand von der Anodenscheibe befindet, ist es gegen zu hohe Temperaturen geschützt, weil die Wärme über das Gleitlager und den Kühlmittelstrom abgeführt wird.

Grundsätzlich wäre es möglich, den Rotor 8 elektrisch leitend mit der Antriebswelle 5 bzw. mit der Anodenscheibe 4 zu verbinden, so daß dieser im Betrieb ebenfalls Hochspannungspotential führen würde und der Isolator 7 entfallen könnte. In diesem Falle wäre allerdings ein größerer Spalt zwischen dem Kolben und dem Rotor erforderlich, was die magnetische Lagerung wesentlich erschweren würde. Dadurch, daß zwischen dem Rotor und der Anodenscheibe der Keramikisolator 7 vorgesehen ist, kann der Rotor Erdpotential führen (so daß der Abstand zur Kolbenwand gering sein kann) und die Anodenscheibe auf Hochspannungspotentail betrieben werden. Um zu verhindern, daß der Rotor infolge von Leckströmen o.dgl. Hochspannungspotential annimmt, müßen Mittel vorgesehen sein, die bewirken, daß sich auf dem Rotor wenigstens annähernd das gleiche Potential einstellt wie auf dem Kolben 1, d.h. Erdpotential. Derartige Mittel sind beispielsweise in der DE-OS 2 601 529 beschrieben. Darüber hinaus könnte der Rotor auch über einen magnetisch betätigbaren Schleifkontakt mit Erde verbunden sein, der immer nur dann geschaltet wird, wenn die Röntgenröhre an Hochspannung liegt.

Die in Fig. 1 dargestellte Ausführungsform mit einem starren Topf 13 stellt hohe Anforderungen u.a. an die Genauigkeit, mit der der Rotor 8 und die mit ihm rotierenden Teile durch das Magnetlagersystem 9, 10 positioniert werden. Wenn diese Anforderungen nicht erfüllt werden, kann die Weite des Spaltes des Gleitlagers relativ stark schwanken, insbesondere auch abnehmen, was eine starke Zunahme der Reibung zur Folge hat. Eine solche Zunahme kann sich darüber hinaus auch ergeben, wenn die Drehzahl der Anodenscheibe über den Wert hinaus erhöht wird, für den das Gleitlager ausgelegt ist.

In Fig. 2 ist eine Modifikation des feststehenden Teils der Gleitlagers nach Fig. 1 dargestellt, bei der diese Probleme nicht auftreten. Der feststehende Teil des Gleitlagers – in Fig. 2 mit 13' bezeichnet – ist dabei nämlich nicht starr mit dem Isolator 14 verbunden, sondern an dem einen Ende eines elastischen Metallbalges 19 befestigt, dessen anderes Ende mit einem stabilen Ring 20 verbunden ist, der seinerseits auf dem Isolator 14 befestigt ist und das Lager 17 trägt. Gegen die Federkraft des Metallbalges 19 kann also der feststehende Teil 13' des Gleitlagers in axialer Richtung verschoben werden. Die zwischen den Flächen 12 und 13' übertragene Kraft wird somit von der Vorspannung des Metallbalges sowie von der vom Kühlmittelstrom auf den Teil 13' ausgeübten Druckkraft bestimmt. Die daraus resultierende Gesamtkraft läßt sich so einstellen, daß sie nur einem Bruchteil des Gewichtes der Drehanode, beispielsweise einem Zehntel des Gewichtes, entspricht. Gegebenenfalls kann diese Druckkraft durch eine im Innern des Metallbalges angeordnete Zugfeder verringert werden.

Wenn bei dieser Konstruktion die Drehzahl der Anodenscheibe erhöht wird, können Kräfte auftreten, die größer sind als die auf den scheibenförmigen Teil 13' wirkende Druckkraft. Der Metallbalg wird dadurch zusammengedrückt, so daß sich der Spalt zwischen der Stirnfläche 12 und der Fläche 13' vergrößert. bis die über das Gleitlager übertragene Kraft der vom Metallbalg und dem Flüssigkeitsdruck ausgeübten Kraft entspricht. Die über dieses Lager übertragene Kraft kann daher einen vorbestimmten Wert nicht überschreiten und mithin auch nicht die Reibung in diesem Lager.

Das gleiche gilt, wenn die Drehanode durch die magnetische Lagerung nicht exakt in der vorbestimmten Position gehalten wird. Die Fläche 13' folgt aufgrund der Vorspannung allen Positionsänderungen der Drehanode in axialer Richtung. Die Reibungskräfte überschreiten auch in diesem Fall nicht den durch die Vorspannung gegebenen Wert. Wenn in Betriebspausen der Strom durch das magnetische Lagersystem abgeschaltet ist, drückt das Gewicht der Drehanode den Balg zusammen, bis die Drehanode auf dem Lager 17 aufliegt.

**Patentansprüche**

1. Drehanoden-Röntgenröhre mit einem Gleitlager, das zwischen einem rotierenden Teil und einem feststehenden Teil eine Schicht aus einem flüssigen Metall oder einer flüssigen Metall-Legierung aufweist, und mit einem weiteren Lagersystem, dadurch gekennzeichnet, daß das weitere Lagersystem (9, 10) so aufgebaut ist, daß es das rotierende Teil des Lagers sowohl in axialer als auch in radialer Richtung hält und die von der rotierenden Drehanode bewirkten axialen und radialen Kräfte vollständig aufnehmen kann, und daß das Gleitlager hauptsächlich zum Abführen des im Betrieb auftretenden Wärmestromes dient und so gestaltet ist, daß es bei rotierender Anode die in axialer wie in radialer Richtung wirkenden Kräfte allenfalls nur zu einem geringen Bruchteil aufnimmt.

2. Drehanoden-Röntgenröhre nach Anspruch 1, dadurch gekennzeichnet, daß das Gleitlager eine von der Drehachse der Drehanode senkrecht durchsetzte Fläche (12, 13') aufweist.

3. Drehanoden-Röntgenröhre nach Anspruch 1, dadurch gekennzeichnet, daß der feststehende Teil des Gleitlagers (13, 13') von einem Kühlmittelstrom kühlbar ist.

4. Röntgenröhre nach Anspruch 3, dadurch gekennzeichnet, daß der Kühlmittelstrom durch ein Rohr (15) in einem Hochspannungsisolator (14) geführt wird, der das Gleitlager trägt.

5. Drehanoden-Röntgenröhre nach Anspruch 4, dadurch gekennzeichnet, daß der elektrische Strom über das Rohr (15) zur Drehanodenscheibe (4) fließt.

6. Drehanoden-Röntgenröhre nach einem der vorhergehenden Ansprüche, dadurch gekennzeichnet, daß der feststehende Teil (13') des Gleitlagers von einem nachgiebigen Teil, vorzugsweise von einem Metallbalg (19) getragen wird, der mit einem feststehenden Teil (20, 14) der Röntgenröhre verbunden ist.

7. Drehanoden-Röntgenröhre nach einem der vorhergehenden Ansprüche, insbesondere nach Anspruch 6, dadurch gekennzeichnet, daß das weitere Lager ein Magnetlagersystem ist.

8. Drehanoden-Röntgenröhre nach einem der vorhergehenden Ansprüche, dadurch gekennzeichnet, daß das Gleitlager als Spiralrillenlager ausgebildet ist.

## Claims

1. A rotary anode X-ray tube with a sleeve bearing which comprises, between a rotating part and a stationary part, a layer of a liquid metal or a liquid metal alloy, and with a further bearing system, characterized in that the further bearing system (9, 10) is constructed so that it retains the rotating part of the bearing in the axial as well as the radial direction and can entirely absorb the axial and radial forces produced by the rotating rotary anode, and in that the sleeve bearing serves mainly for dissipating the heat current occurring during operation and is constructed so that when the anode rotates, it absorbs only a small fraction of the bearing forces acting in the axial and the radial direction.

2. A rotary anode X-ray tube as claimed in Claim 1, characterized in that the sleeve bearing has a surface (12, 13') traversed perpendicularly by the axis of rotation of the rotary anode.

3. A rotary anode X-ray tube as claimed in Claim 1, characterized in that the stationary part of the sleeve bearing (13, 13') can be cooled by a flow of cooling agent.

4. A rotary anode X-ray tube as claimed in Claim 3, characterized in that the flow of cooling agent is conducted through a tube (15) in a high-voltage insulator (14) carrying the sleeve bearing.

5. A rotary anode X-ray tube as claimed in Claim 4, characterized in that the electrical current flows through the tube (15) to the rotary anode disk (4).

6. A rotary anode X-ray tube as claimed in any one of the preceding Claims, characterized in that the stationary part (13') of the sleeve bearing is carried by a resilient part, preferably by a metal bellows (19), which is connected to a stationary part (20, 14) of the X-ray tube.

7. A rotary anode X-ray tube as claimed in any one of the preceding Claims, more particularly as claimed in Claim 6, characterized in that the further bearing is a magnetic bearing system.

8. A rotary anode X-ray tube as claimed in any one of the preceding Claims, characterized in that the sleeve bearing is constructed as a spiral groove bearing.

## Revendications

1. Tube à rayons X à anode tournante, équipé d'un palier lisse, qui, entre une partie tournante et une partie fixe, comporte une couche d'un métal liquide ou d'un alliage métallique liquide, et d'un autre système de palier, caractérisé en ce que l'autre système de palier (9, 10) est construit d'une manière telle qu'il maintient la partie tournante du palier à la fois en sens axial et en sens radial et peut contenir complètement les forces axiales et radiales exercées par l'anode qui tourne, et que le palier lisse sert principalement à évacuer le flux thermique produit en fonctionnement et est conformé d'une manière telle que, lorsque l'anode tourne, il ne contient en tout cas qu'une faible fraction des forces exercées en sens axial et en sens radial.

2. Tube à rayons X à anode tournante suivant la revendication 1, caractérisé en ce que le palier lisse comporte une face (12, 13') traversée perpendiculairement par l'axe de rotation de l'anode tournante.

3. Tube à rayons X à anode tournante suivant la revendication 1, caractérisé en ce que la partie fixe du palier lisse (13, 13') peut être refroidie par un flux d'agent de refroidissement.

4. Tube à rayons X suivant la revendication 3, caractérisé en ce que le flux d'agent de refroidissement passe par un tube (15) dans un isolateur à haute tension (14) qui porte le palier (10).

5. Tube à rayons X à anode tournante suivant la revendication 4, caractérisé en ce que le courant électrique passe par le tube (15) vers le disque d'anode tournante (4).

6. Tube à rayons X à anode tournante suivant l'une quelconque des revendications précédentes, caractérisé en ce que la partie fixe (13') du palier lisse est supportée par une partie flexible, de préférence un soufflet métallique (19), qui est reliée à une partie fixe (20, 14) du tube à rayons X.

7. Tube à rayons X à anode tournante suivant l'une quelconque des revendications précédentes, en particulier suivant la revendication 6, caractérisé en ce que l'autre palier est un système de palier magnétique.

8. Tube à rayons X à anode tournante suivant l'une quelconque des revendications précédentes, caractérisé en ce que le palier lisse a la forme d'un palier à rainures hélicoïdales.

EP 0 145 074 B1

Fig.2

Fig.1